(19) Europäisches Patentamt / European Patent Office / Office européen des brevets

(11) **EP 2 924 414 B1**

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(51) Int Cl.:
**G01M 15/14** [(2006.01)]   **G01L 19/06** [(2006.01)]

(21) Anmeldenummer: **15158438.0**

(22) Anmeldetag: **10.03.2015**

(54) **DRUCKMESSVORRICHTUNG ZUR MESSUNG DYNAMISCHER DRÜCKE SOWIE GASTURBINENBRENNKAMMER MIT EINER DRUCKMESSVORRICHTUNG**

PRESSURE MEASURING DEVICE FOR MEASURING DYNAMIC PRESSURES AND GAS TURBINE BURNER WITH A PRESSURE MEASUREMENT DEVICE

DISPOSITIF DE MESURE DE PRESSION DESTINÉ À MESURER DES PRESSIONS DYNAMIQUES ET CHAMBRE DE COMBUSTION DE TURBINES À GAZ DOTÉE D'UN DISPOSITIF DE MESURE DE PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2014 DE 102014205459**

(43) Veröffentlichungstag der Anmeldung:
**30.09.2015 Patentblatt 2015/40**

(73) Patentinhaber:
• **Rolls-Royce Deutschland Ltd & Co KG**
 **15827 Blankenfelde-Mahlow (DE)**
• **Rolls-Royce plc**
 **London SW1E 6AT (GB)**

(72) Erfinder:
• **Sadig, Sermed**
 **12249 Berlin (DE)**
• **Rupp, Jochen Dr.**
 **Staffordshire, DE13 0AJ (GB)**

(74) Vertreter: **Hoefer & Partner Patentanwälte mbB**
 **Pilgersheimer Straße 20**
 **81543 München (DE)**

(56) Entgegenhaltungen:
EP-A1- 0 897 106    DE-A1- 2 949 670
US-A1- 2004 134 284    US-A1- 2007 261 395
US-A1- 2008 276 712

EP 2 924 414 B1

**Beschreibung**

Die Erfindung bezieht sich auf die Messung von Druckschwankungen, insbesondere von Druckschwankungen in einer Brennkammer einer Gasturbine. Dabei bezieht sich die Erfindung insbesondere auf eine P30-Druckleitung, welche an einem äußeren Brennkammergehäuse angeordnet ist.

Aus dem Stand der Technik ist es bekannt, stationäre Drücke in einer Brennkammer einer Gasturbine, insbesondere einer Fluggasturbine, über eine sog. P30-Druckleitung zu messen. Diese Druckleitung ist gemäß dem Stand der Technik als flexibles Rohr ausgebildet und besteht aus einzelnen Elementen, die zusammengesteckt oder in anderer Weise verbunden werden. Dabei treten zwischen den einzelnen Elementen Querschnittssprünge auf, welche die instationäre Druckmessung beeinträchtigen können. Eine derartige Anordnung zeigt die US 6,053,048 A.

Bei einer vorbekannten Druckleitung ist es bekannt, bei dieser an einer Stelle einen Druckaufnehmer anzubringen, der den Druck in der Druckleitung misst und an eine Triebwerkssteuereinheit (EEC) weiterleitet. An ihrer anderen Seite ist die Druckleitung, welches ein äußeres Brennkammergehäuse durchdringt, mit einem Brennkammerannulus verbunden. An dieser Verbindungsstelle mit dem Brennkammerannulus wird der P30-Druck abgegriffen.

Aufgrund der hohen Wärmebelastung nahe des Brennkammergehäuses wird die Druckleitung gemäß dem Stand der Technik über mehrere Meter bis in eine kalte Zone nahe der Triebwerkssteuereinheit geführt. Dort ist der Drucksensor platziert. Das gesamte aus dem Stand der Technik bekannte System ist darauf ausgelegt, stationäre Drücke zu messen.

Ein weiterer Nachteil der vorbekannten Konstruktionen liegt darin, dass zusätzliche Querschnittsveränderungen oder Querschnittssprünge in der Druckleitung vorgesehen sind, um Wasserfallen zu bilden. Diese schützen den Drucksensor vor einer Ansammlung von Wasser.

Aus dem Stand der Technik sind weiterhin Druckmessaufbauten bekannt, mittels derer instationäre Drücke in einer Brennkammer einer Gasturbine gemessen werden können. Hierbei führt in der Regel ein Druckröhrchen von der Brennkammerwand, ausgehend durch das Brennkammergehäuse, zu einem Drucksensor. Dieser kann entweder möglichst nah an das Brennkammergehäuse geführt werden. Hierbei sind jedoch teure Hochtemperatursensoren erforderlich. Alternativ hierzu können die Sensoren orthogonal zu dem Druckröhrchen angebracht werden, während das Druckröhrchen über ein sogenanntes halbunendliches Röhrchen entstehende Reflexionen in der Druckleitung vermeidet. Derartige halbunendliche Röhrchen weisen erhebliche Längen auf, beispielsweise zwischen 10m und 50m. Ein derartiges System ist aus der US 2003/0024318 A1 bekannt.

In alternativer Ausgestaltung ist es auch möglich, instationäre P30-Drücke direkt am Triebwerksgehäuse zu messen. Dies ist jedoch aufgrund der hohen Wärmebelastung nur mit teuren Hochtemperatur-Drucksensoren möglich.

Die aus dem Stand der Technik bekannten Anordnungen sind meist nur für die Messung des stationären Brennkammerdrucks, nicht jedoch für instationäre Messungen geeignet. Nachteilig erweist es sich dabei auch, dass in den relativ langen Druckleitungen akustische Reflexionen auftreten, welche das Messsignal stören und somit eine akustische Messung für Frequenzen zwischen 50 Hz und 4000 Hz verhindert. Bei der aus der US 2003/0024318 A1 bekannten Ausgestaltung ergibt sich, wie erwähnt, eine sehr lange Druckleitung, welche ein zusätzliches Gewicht darstellt und die Gesamtkosten erhöht. Ein zusätzliches Problem besteht darin, dass vielfach wegen der Vielzahl von Kraftstoffleitungen und Triebwerksinstrumentenleitungen kein ausreichender Platz zur Verfügung steht, um eine mehrere 10m lange Druckleitung einzubauen.

Die DE 29 49 670 A1 zeigt eine Einrichtung zur Messung dynamischer Drücke, bei welcher ein Messrohr an eine Druckquelle angeschlossen ist. Das Messrohr ist an seinem freien Ende geschlossen. Der mittlere Bereich des Messrohrs durchläuft einen Wandlerblock, in welchen ein Druckwandler eingesetzt ist.

Die US 2004/0134284 A1 zeigt ein dynamisches Druckmesssystem mit einem Dämpfer, welcher zum einen am freien Ende der Druckleitung angeschlossen ist und zum anderen über einen separaten Druckkanal mit dem druckbeaufschlagten Volumen verbunden ist.

Eine weitere Druckmessvorrichtung offenbart die US 2008/0276712 A1. Dabei bildet das geschlossene Ende der Druckleitung einen Teil eines Dämpfungsvolumens.

Ferner ist aus der EP 0 897 106 A1 eine Druckmessvorrichtung gemäß dem Oberbegriff des Anspruchs 1 bekannt.

Der Erfindung liegt die Aufgabe zugrunde, eine Druckmessvorrichtung sowie eine mit einer derartigen Druckmessvorrichtung ausgestattete Gasturbine zu schaffen, welche bei einfachem Aufbau und einfacher, kostengünstiger Herstellbarkeit eine störungsfreie Druckmessung ermöglichen und insbesondere eine geringe Baugröße erfordern.

Erfindungsgemäß wird die Aufgabe durch die Merkmalskombinationen der unabhängigen Ansprüche gelöst, die jeweiligen Unteransprüche zeigen weitere vorteilhafte Ausgestaltungen der Erfindung.

Erfindungsgemäß ist somit vorgesehen, dass eine Druckleitung mit einem druckbeaufschlagten Volumen verbunden ist. Die Druckleitung steht weiterhin mit einem Drucksensor in Verbindung, welcher in einem Abstand von dem Einlassbereich der Druckleitung angeordnet ist. Dabei ist erfindungsgemäß vorgesehen, dass die Druckleitung mit zumindest einer Lochblende versehen ist und an ihrer, dem druckbeaufschlagten Volumen entgegengesetzten Seite mit einem zusätzlichen Volumen verbunden ist. Erfindungsgemäß ist das Volumen mit einer Austrittsöffnung versehen.

Hinsichtlich der Gasturbine ist vorgesehen, dass die Druckmessvorrichtung zur Druckmessung in einer Brennkammer der Gasturbine vorgesehen ist und hierzu die Druckleitung mit einem Annulus der Brennkammer verbunden ist.

Die Erfindung zeichnet sich durch eine Reihe erheblicher Vorteile aus.

Durch den erfindungsgemäßen Messaufbau ist es möglich, dynamische Druckschwankungen in einer Brennkammer zu messen. Durch die erfindungsgemäß vorgesehene Lochblende erfolgt eine Dämpfung unerwünschter Schwingungen in dem Messaufbau. Insbesondere akustische Wellen werden durch die Blende gedämpft. Hierdurch ist ein großer Messbereich möglich, der nicht durch die aus dem Stand der Technik bekannten akustischen Fehler beeinträchtigt wird. Durch das zusätzlich vorgesehene Volumen, welches auch als Dämpfungsvolumen bezeichnet werden kann, ergibt sich eine Möglichkeit, dynamische Drücke über eine ausreichend lange Druckleitung zu messen. Die Druckleitung kann dabei so dimensioniert werden, dass der Drucksensor ausreichend weit von der Brennkammer entfernt angeordnet werden kann, um diesen vor thermischen Einflüssen zu schützen. Hierdurch ist es möglich, einen kostengünstigen Drucksensor zu verwenden. Durch die Austrittsöffnung des Volumens kann eine durch die Druckleitung strömende Strömung austreten werden, so wie dies durch die Strömungspfeile dargestellt ist. Dabei erzeugt erfindungsgemäß die Austrittsöffnung des Volumens einen weiteren Druckgradienten über die Druckleitung. Auf eine reflexionsarme halbunendliche Druckleitung, so wie diese aus dem Stand der Technik bekannt ist, kann erfindungsgemäß verzichtet werden. Stattdessen kann erfindungsgemäß eine bereits existierende P30-Druckleitung in geeigneter Weise modifiziert und gleichzeitig zu einer dynamischen Druckmessung verwendet werden.

Erfindungsgemäß ist es möglich, stromab der Blende konstruktive Maßnahmen vorzusehen, um Wasser in der Druckleitung anzusammeln und abzulassen, ohne dass sich dabei das akustische Verhalten der erfindungsgemäßen dynamischen Druckmessvorrichtung ändert.

Durch den erfindungsgemäß möglichen einfachen Aufbau ist die Möglichkeit geschaffen, dynamische Druckmessungen von Brennkammerdruckschwingungen durchzuführen, die aus dem Stand der Technik aus kosten- und gewichtsgründen vermieden wurden. Somit ist es möglich, wichtige Daten für die Lebensdauerberechnung bzw. Lebensdauerabschätzung der Brennkammer zu sammeln. Dies ist insbesondere bei Magerverbrennungssystemen wichtig, da bei diesem höhere Druckschwingungen auftreten, als bei fetten Verbrennungssystemen.

Ganz allgemein ist die Erfindung nicht auf die Verwendung in Gasturbinen, insbesondere Fluggasturbinen, beschränkt. Vielmehr kann die erfindungsgemäße Druckmessvorrichtung zur Messung dynamischer Drücke im Hochtemperaturbereich auch für andere Anwendungen zum Einsatz kommen.

Nachfolgend wird die Erfindung anhand von Ausführungsbeispielen in Verbindung mit der Zeichnung beschrieben. Dabei zeigt:

Fig. 1      ein Gasturbinentriebwerk zur Verwendung der erfindungsgemäßen Gasturbinenbrennkammer,

Fig. 2      eine schematische Seitenansicht einer aus dem Stand der Technik bekannten Brennkammer,

Fig. 3, 7 und 8      Beispiele von Druckmessvorrichtungen, und

Fig. 4 bis 6      Erfindungsgemäßen Druckmessvorrichtung in schematischer Seitenansicht.

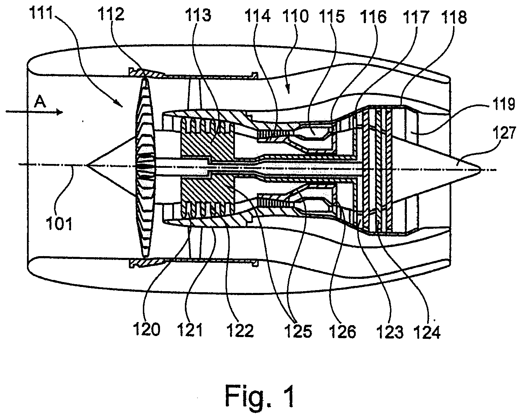

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 101 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Triebwerksgehäuse 121 in einen ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 101.

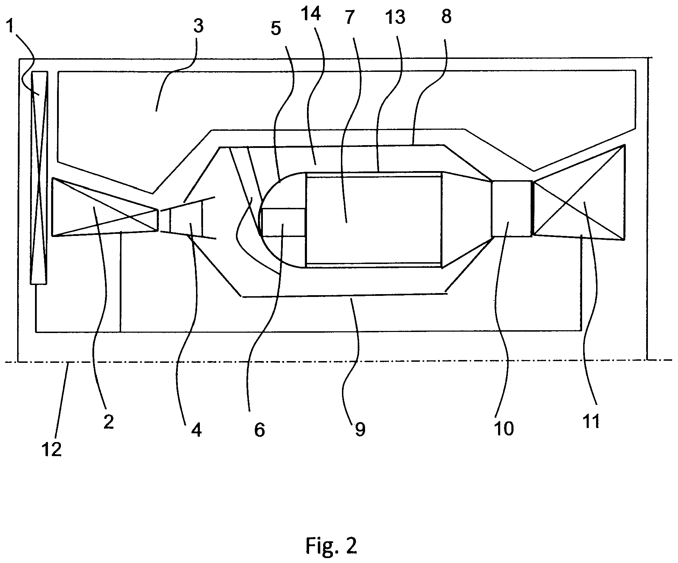

Die Fig. 2 zeigt in vereinfachter Darstellung einen Teil einer Ringbrennkammer 7. Diese umfasst einen Brennkammerkopf 5 sowie einen Brenner 6 mit einem Brennerarm und einem Brennerkopf. Stromauf des Brenners ist ein Verdichterleitrad 4 schematisch dargestellt, welchem Luft aus einem Verdichter 2 zugeführt wird. Das Bezugszeichen 1 zeigt ein Frontgebläse (Fan). Die aus dem Frontgebläse 1 austretende Luftströmung wird auch durch einen Nebenstromkanal 3 geleitet.

Die Brennkammer 7 umfasst ein äußeres Brennkammergehäuse 8 sowie ein inneres Brennkammergehäuse 9. Am Austrittsbereich der Brennkammer 7 ist ein Turbinenleitrad 10 angeordnet. Diesem folgt eine Turbine 11. Mit dem Bezugszeichen 12 ist eine Antriebswelle/Triebwerksmittelachse dargestellt.

Die Brennkammer 7 weist weiterhin eine Brennkammerwand 13 auf, welche mit dem äußeren Brennkammergehäuse 8 einen Brennkammerannulus 14 bildet, so wie dies in Fig. 2 dargestellt ist.

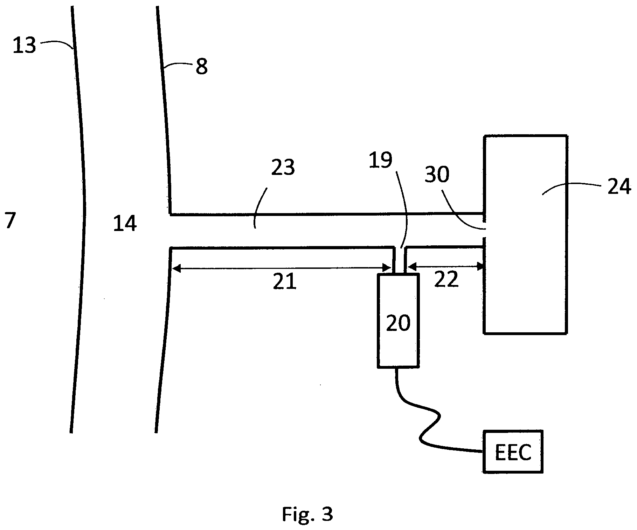

Die Fig. 3, 7 und 8 zeigen jeweils in vereinfachter Darstellung Ausgestaltungsvarianten einer Druckmessvorrichtung. Bei dieser wird zur Messung von dynamischen Druckschwankungen in der Brennkammer 7 der Druck aus dem Brennkammerannulus 14, der über eine Belochung in der Brennkammerwand 13 sowie über den Brenner 6 eine akustische Verbindung in die Brennkammer aufweist, über eine statische Druckleitung 23 am Brennkammergehäuse 8 abgegriffen. Ein Drucksensor 20 ist vorgesehen, welcher über einen Abstand 21 von dem Verbindungsbereich der Druckleitung 23 mit dem äußeren Brennkammergehäuse 8 beabstandet ist.

Bei den Beispielen der Fig. 3, 7 und 8 ist der Drucksensor 20 mittels einer der Fig. 3, 7 und 8 ist der Drucksensor 20 mittels einer separaten Verbindungsleitung 19 von der Druckleitung 23 beabstandet und mit dieser verbunden.

Bei dem in Fig. 3 gezeigten Beispiel ist die Druckleitung 23 über den Anschlussbereich der Verbindungsleitung 19 verlängert und weist eine Blende 30 auf, über welche der Innenraum der Druckleitung 23 mit einem Dämpfungsvolumen 24 in Verbindung steht. Der Abstand vom Anschlussbereich der Verbindungsleitung 19 zur Blende 30 ist mit dem Bezugszeichen 22 versehen.

Der Drucksensor 20 ist, wie auch bei den nachfolgend beschriebenen Ausführungsbeispielen jeweils mit einer Triebwerkssteuereinheit EEC verbunden.

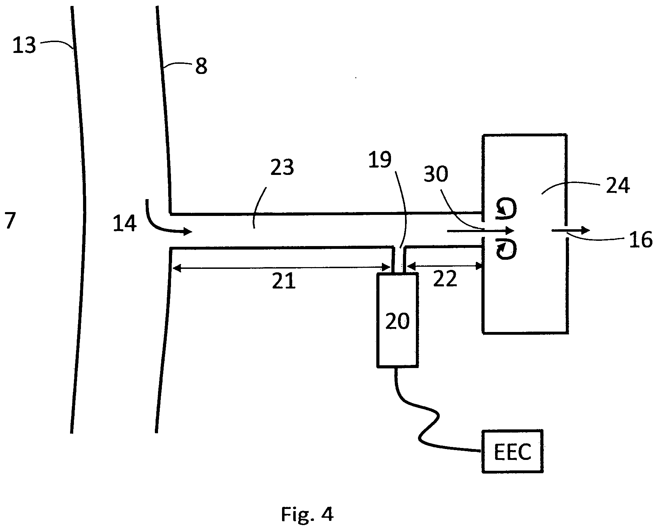

Bei dem in Fig. 3 gezeigten Beispiel ist das Dämpfungsvolumen 24 lediglich durch die Blende 30 zur Druckleitung 23 geöffnet. Die Druckleitung 23 ist nicht durchströmt, nimmt jedoch die dynamischen Druckschwankungen auf. Insgesamt ergibt sich durch die Blende 30 ein Helmholtz-Resonator. Die Fig. 4 bis 6 zeigen eine erfindungsgemäße Druckmessvorrichtung.

Bei den nachfolgend beschriebenen Ausführungsbeispielen sind gleiche Teile jeweils mit gleichen Bezugsziffern versehen, so dass auf eine nochmalige Beschreibung verzichtet werden kann. Die erfindungsgemäßen Druckmessvorrichtung der Fig. 4 unterscheidet sich von dem Beispiel der Fig. 3 darin, dass das Volumen 24 mit einer Austrittsöffnung 16 versehen ist, durch welche eine durch die Druckleitung 23 strömende Strömung austreten kann, so wie dies durch die Strömungspfeile dargestellt ist. Bei der in Fig. 4 gezeigte erfindungsgemäßen Druckmessvorrichtung erzeugt die Austrittsöffnung 16 des Volumens 24 einen weiteren Druckgradienten über die Druckleitung 23. Dabei wird das Verhältnis der Querschnittsfläche der Blende 30 zu der Querschnittsfläche des Volumens 24 bevorzugterweise so gewählt, dass das Verhältnis einem Faktor von 0,1 bis 10 Mal der Machzahl in der Blende 30 entspricht.

Die Austrittsöffnung 16 aus dem Volumen 24 kann wahlweise zur Umgebung hin geöffnet sein oder mit dem Triebwerk verbunden werden, um die entnommene Luft dem Triebwerk wieder zuzuführen.

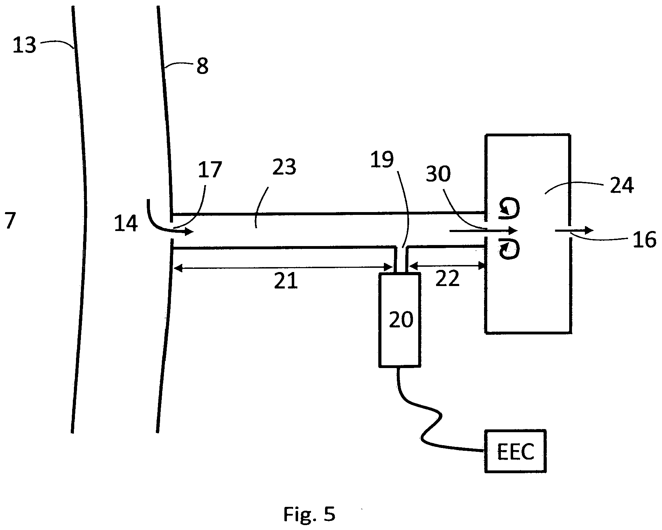

Bei dem Ausführungsbeispiel der Fig. 5 ist am Eintrittsbereich der Druckleitung 23 eine zusätzliche Blende 17 angeordnet. Im Übrigen entspricht das Ausführungsbeispiel der Fig. 5 dem in Fig. 4 gezeigten Ausführungsbeispiel. Das in Fig. 5 gezeigte Ausführungsbeispiel kann auch ohne die Blende 30 ausgebildet sein. Die erfindungsgemäß notwendige Blende wird dabei durch die Blende 17 gebildet.

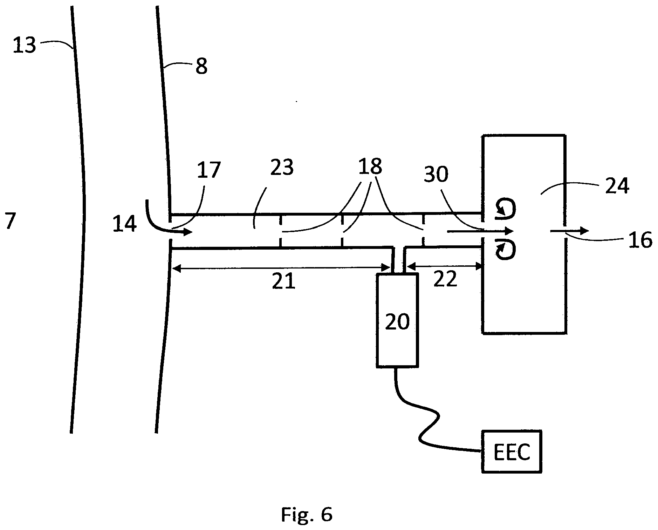

Die Fig. 6 zeigt eine weitere Variante, bei welcher, in Weiterbildung des Ausführungsbeispiels der Fig. 5, in der Druckleitung 23 weitere Blenden 18 angeordnet sind. Die Fig. 6 zeigt mehrere Blenden 18, es versteht sich, dass auch nur eine derartige Blende 18 verwendet werden kann. Weiterhin ist es auch möglich, auf die Blenden 17 und 30 zu verzichten.

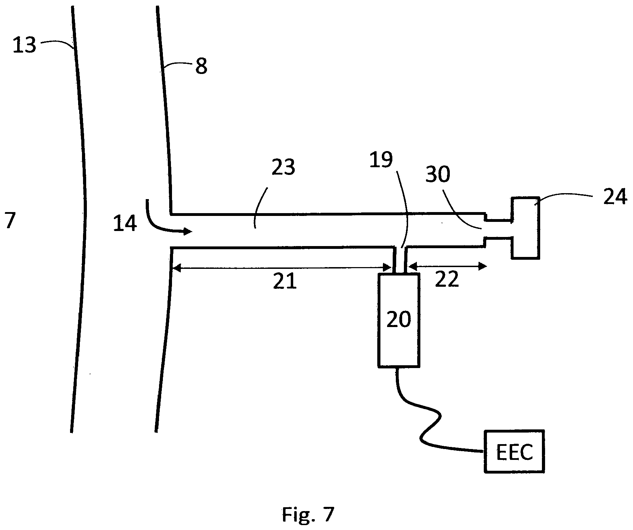

Die Fig. 7 zeigt ein Beispiel analog der Fig. 3. Allerdings ist bei dem in Fig. 7 gezeigten Beispiel die Blende 30 länger ausgebildet, so dass sich das Volumen 24 kleiner ausführen lässt. Die Blende 30 weist somit, wie beschrieben, eine größere Länge auf. Die Länge der Blende 30 sowie deren Durchmesser und das Volumen 24 können wie folgt berechnet werden:

$$V = \left(\frac{a_0}{2\pi f}\right)^2 \frac{S_0}{l_{eff}}.$$

Dabei bezeichnet "$a_0$" die Schallgeschwindigkeit, "f" die Resonanzfrequenz, "$S_0$" die Querschnittsfläche der Blende 30 und "$l_{eff}$" die Länge der Blende 30.

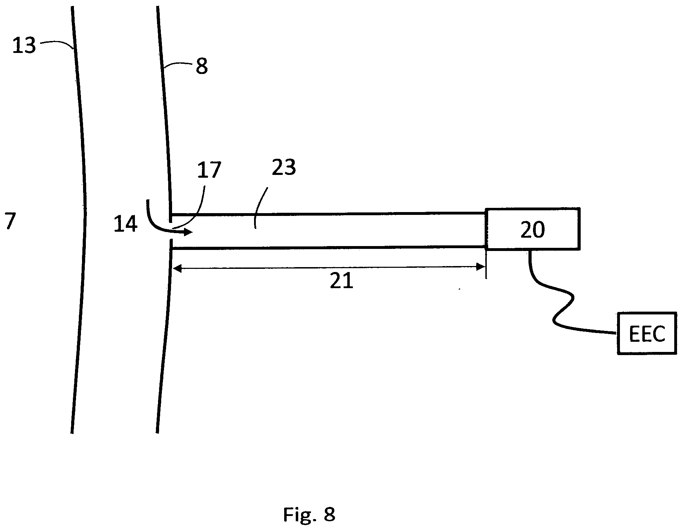

Die Fig. 8 zeigt ein Beispiel, bei welchem der Drucksensor 20 direkt am Endbereich der Druckleitung 23 angeordnet ist. Am Eintrittsbereich der Druckleitung 23 ist eine Blende 17 vorgesehen.

Die Blende 30 kann als perforiertes Blech ausgebildet werden. Der Abstand 21 vom Drucksensor 20 zum äußeren Brennkammergehäuse 8 kann zwischen 10mm und 10m betragen. Der Abstand 22 vom Drucksensor 20 zur Blende 30 kann ebenfalls zwischen 10mm und 10m betragen.

Besonders günstig ist es, wenn die Querschnittsfläche der Druckleitung 23 keine großen Durchmessersprünge aufweist, insbesondere keine Durchmessersprünge, die größer sind als ein Durchmesser der Druckleitung 23.

Bezugszeichenliste:

| 1 | Frontgebläse (Fan) |
| 2 | Verdichter |
| 3 | Nebenstromkanal |
| 4 | Verdichterleitrad |
| 5 | Brennkammerkopf |
| 6 | Brenner mit Arm und Kopf |
| 7 | Brennkammer |
| 8 | Äußeres Brennkammergehäuse |
| 9 | Inneres Brennkammergehäuse |
| 10 | Turbinenleitrad |
| 11 | Turbine |
| 12 | Antriebswelle/Triebswerksmittelachse |
| 13 | Brennkammerwand |
| 14 | Brennkammerannulus |
| 16 | Austrittsöffnung aus dem Volumen 24 |
| 17 | Blende zum Brennkammerannulus 14 hin gerichtet |
| 18 | Blende in der Druckleitung 23 |
| 19 | Verbindungsleitung vom Drucksensor 20 zur Druckleitung 23 |
| 20 | Drucksensor |
| 21 | Abstand Drucksensor 20 zum äußeren Brennkammergehäuse 8 |
| 22 | Abstand Drucksensor 20 zur Blende 30 |
| 23 | Druckleitung |
| 24 | Dämpfungsvolumen stromab der Blende 30 |
| 30 | Blende zum Dämpfungsvolumen 24 |

| 101 | Triebwerksmittelachse |
| 110 | Gasturbinentriebwerk / Kerntriebwerk |
| 111 | Lufteinlass |
| 112 | Fan |
| 113 | Mitteldruckkompressor (Verdichter) |
| 114 | Hochdruckkompressor |
| 115 | Brennkammer |
| 116 | Hochdruckturbine |
| 117 | Mitteldruckturbine |
| 118 | Niederdruckturbine |
| 119 | Abgasdüse |
| 120 | Leitschaufeln |
| 121 | Triebwerksgehäuse |
| 122 | Kompressorlaufschaufeln |
| 123 | Leitschaufeln |
| 124 | Turbinenschaufeln |
| 125 | Kompressortrommel oder -scheibe |
| 126 | Turbinenrotornabe |
| 127 | Auslasskonus |

**Patentansprüche**

1. Druckmessvorrichtung zur Messung dynamischer Drücke im Hochtemperaturbereich, mit einer Druckleitung (23), welche über einen Einlassbereich mit einem druckbeaufschlagten Volumen (14) verbunden ist, sowie mit einem Drucksensor (20), welcher in einem Abstand (21) von dem Einlassbereich der Druckleitung (23) zu dem Volumen (14) angeordnet ist, wobei der Drucksensor (20) mittels einer separaten Verbindungsleitung (19) mit der Druckleitung (23) verbunden ist und wobei die Druckleitung (23) mit einem zusätzlichen Dämpfungsvolumen (24) verbunden ist, **dadurch gekennzeichnet, dass** die Druckleitung (23) an ihrem dem Einlassbereich gegenüberliegenden Ende mit zumindest einer Lochblende (30) versehen ist, über welche der Innenraum der Druckleitung (23) mit dem zusätzlichen Dämpfungsvolumen (24) verbunden ist, und das zusätzliche Dämpfungsvolumen (24) mit einer Austrittsöffnung (16) versehen ist, über welche das zusätzliche Dämpfungsvolumen (24) von einer durch die Druckleitung (23) strömenden Fluidströmung durchströmbar ist.

2. Vorrichtung nach einem der Ansprüche 1, **dadurch gekennzeichnet, dass** in der Druckleitung (23) zumindest eine weitere Blende (17, 18) angeordnet ist.

3. Verwendung einer Druckmessvorrichtung nach einem der Ansprüche 1 oder 2 zur dynamischen Druckmessung in einer Brennkammer einer Gasturbine.

4. verwendung nach Anspruch 3, **dadurch gekennzeichnet, dass** die Druckleitung (23) mit einem Annulus (14) einer Brennkammer (7) verbunden ist.

5. Verwendung nach Anspruch 3 oder 4, **dadurch gekennzeichnet, dass** der Drucksensor (20) mit einer elektronischen Triebwerksteuereinheit in Betriebsverbindung steht.

6. Verwendung nach einem der Ansprüche 3 bis 5, **dadurch gekennzeichnet, dass** der Drucksensor (20) als dynamischer Drucksensor ausgebildet ist.

**Claims**

1. Pressure-measuring device for measuring dynamic pressures in the high-temperature range, with a pressure line (23) connected via an inlet area to a volume (14) subjected to pressure and with a pressure sensor (20) which is arranged at a distance (21) from the inlet area of the pressure line (23) to the volume (14), where the pressure sensor (20) is connected to the pressure line (23) by means of a separate connecting line (19), and where the pressure line (23) is connected to an additional damping volume (24), **characterized in that** the pressure line (23) is provided with at least one pinhole diaphragm (30) at its end opposite to the inlet area, using which diaphragm the interior of the pressure line (23) is connected to the additional damping volume (24), and that the additional damping volume (24) is provided with an outlet opening (16) via which the additional damping volume (24) can be passed through by a fluid flowing through the pressure line (23).

2. Device in accordance with Claim 1, **characterized in that** at least one further diaphragm (17, 18) is arranged in the pressure line (23).

3. Use of a pressure-measuring device in accordance with one of the Claims 1 or 2 for dynamic pressure measurement in a combustion chamber of a gas turbine.

4. Use in accordance with Claim 3, **characterized in that** the pressure line (23) is connected to an annulus (14) of a combustion chamber (7).

5. Use in accordance with Claim 3 or 4, **characterized in that** the pressure sensor (20) is operatively connected to an electronic engine control unit.

6. Use in accordance with one of the Claims 3 to 5, **characterized in that** the pressure sensor (20) is designed as a dynamic pressure sensor.


**Revendications**

1. Dispositif de mesure de pression pour mesurer des pressions dynamiques dans la gamme à hautes températures, avec une conduite de pression (23) qui est reliée à un volume (14) sous pression par une zone d'admission et avec un capteur de pression (20) qui est disposé à une certaine distance (21) de la zone d'admission de la conduite de pression (23) menant audit volume (14), sachant que le capteur de pression (20) est relié à la conduite de pression (23) moyennant une conduite de liaison séparée (19) et sachant que la conduite de pression (23) est reliée à un volume d'amortissement supplémentaire (24), **caractérisé en ce que** la conduite de pression (23) à son extrémité opposée à la zone d'admission est pourvue d'au moins un diaphragme à trous (30) par le biais duquel l'espace intérieur de la conduite de pression (23) est relié au volume d'amortissement supplémentaire (24) et que le volume d'amortissement supplémentaire (24) est pourvu d'un orifice de sortie (16) par le biais duquel le volume d'amortissement supplémentaire (24) peut être traversé par un fluide s'écoulant à travers la conduite de pression (23).

2. Dispositif selon la revendication n° 1, **caractérisé en ce qu'**au moins un autre diaphragme (17, 18) est disposé dans la conduite de pression (23).

3. Utilisation d'un dispositif de mesure de pression selon une des revendications n° 1 ou n° 2 pour la mesure de pressions dynamiques dans une chambre de combustion d'une turbine à gaz.

4. Utilisation selon la revendication n° 3, **caractérisée en ce que** la conduite de pression (23) est reliée à un espace annulaire (14) d'une chambre de combustion (7).

5. Utilisation selon la revendication n° 3 ou n° 4, **caractérisée en ce que** le capteur de pression (20) est en liaison fonctionnelle avec une unité électronique de contrôle du moteur.

6. Utilisation selon une des revendications n° 3 à n° 5, **caractérisée en ce que** le capteur de pression (20) est conçu sous la forme d'un capteur de pression dynamique.

Fig. 1

Fig. 2

Fig. 3

Fig. 4

Fig. 5

EP 2 924 414 B1

Fig. 6

Fig. 7

Fig. 8

**IN DER BESCHREIBUNG AUFGEFÜHRTE DOKUMENTE**

**In der Beschreibung aufgeführte Patentdokumente**

- US 6053048 A
- US 20030024318 A1
- DE 2949670 A1
- US 20040134284 A1
- US 20080276712 A1
- EP 0897106 A1